# EUROPEAN PATENT SPECIFICATION

(11) **EP 1 038 700 B1**
(45) Date of publication and mention of the grant of the patent: **25.02.2004**
(21) Application number: 99310501.4
(22) Date of filing: 23.12.1999
(51) Int. Cl.: B60D 1/14, B60D 1/52

(54) **Bumper beam towing eye bracket**
Stossstangenträger-Anordnung mit Anhängevorrichtung
Poutre de pare-chocs avec console de remorquage

(30) Priority: 24.03.1999 GB 9906752
(43) Date of publication of application: 27.09.2000
(73) Proprietor: JAGUAR CARS LIMITED, Allesley Coventry CV5 9DR West Midlands (GB)
(72) Inventor: Grey, Jason John, Stroud, Gloucester GL5 1XA (GB)
(74) Representative: Messulam, Alec Moses

(56) References cited:
- EP-A- 0 430 665
- DE-A- 4 342 981
- DE-A- 19 517 461
- US-A- 5 628 536

## Description

The present invention relates to a motor vehicle having a moulded bumper behind which is a towing eye bracket.

A motor vehicle is usually provided with one or more towing eyes so that the vehicle may tow another vehicle, or be towed by another vehicle. In the former case, the towing eye is provided at the back of the vehicle, and in the latter case the towing eye is at the front of the vehicle. Often the towing eye is secured to a structural member such as a bumper beam so that forces imparted on the towing eye may be transmitted to the vehicle without damaging the vehicle or breaking off the towing eye.

Particularly with motor cars, it is easier to provide a towing eye at the back of the vehicle rather than the front. If the towing eye is at the back of the vehicle, then this can be secured unobtrusively at a level below a rear bumper. The towing eye will usually be less obtrusive than an exhaust pipe.

It is more difficult to provide an aesthetically pleasing or unobtrusive towing eye at the front of the vehicle without disrupting the lines of the vehicle, particularly since there is a desire to design lower front bumpers to reduce drag owing to the amount of air trapped between the vehicle and the road. Sometimes the towing eye protrudes through a gap provided for this purpose in a front bumper. Alternatively, the bumper may not extend as low as would otherwise be desired so that the towing eye can be provided below the level of the bumper.

One known solution to this problem is to provide a small removable cover or panel in a plastic moulded bumper that is comparable in size to the towing eye, and which matches as closely as possible the colour and line of the surrounding bumper. To make the cover as unobtrusive as possible, there is usually a tight seam between the cover and bumper. Even so, the cover is immediately obvious upon inspection of the bumper. There is also the risk of scratching the surrounding bumper when attempting to prise off the small cover, for example with a screwdriver.

It is an object of the present invention to provide a more convenient and aesthetically pleasing solution to the above problems.

Accordingly, the invention provides a motor vehicle with a moulded bumper which has an aperture therethrough, a bumper beam within the vehicle and to which the bumper is secured, a towing eye bracket also secured to the bumper beam, at least one grille and means by which the grille may be removably fitted within the bumper aperture, characterised in that the aperture is disposed so that when the grille is removed from the aperture, access may be had to the towing eye bracket so that the vehicle may tow/be towed.

The bumper may be a front bumper or a rear bumper, but for convenience, the invention will be described herein in terms of a front bumper only.

The bumper moulding may be in any conventional material, for example a glass-reinforced plastics material.

The term "grille" is used herein to denote any type of panel or plate which is visually distinct from the surrounding moulded bumper. The grille may be an air grille, that is a grille having one or more apertures or perforations therethrough adapted to let air pass through the grille when the vehicle is in motion. In this case, the grille may serve an aerodynamic purpose, for example by directing moving air to a radiator.

Alternatively, the grille may be solid or substantially solid, in which case the grill may just be a styling feature, for example extending across a substantial lateral distance of the moulded bumper. In this case, the removable grille is emphasised, rather than minimised in extent to match the surrounding bumper.

Usually the bumper beam will extend transversely across substantially the width of the vehicle, in order to provide full support for the bumper in the event of a crash.

In a preferred embodiment of the invention, the towing eye bracket depends downwardly from the bumper beam. Generally, the bumper beam will be at about the same level as the main protruding portion of the bumper. This then permits the grille to be provided below a main protruding portion of the bumper, which allows a tow bar or rope to be connected to the vehicle at similarly lower level, for example adjacent a lowermost edge of the bumper, which may be desirable for increased stability when towing.

It is particularly advantageous if the towing eye bracket is U-shaped with upwardly extending arms by which the towing eye bracket is secured to the bumper beam. The towing eye bracket may have an integral towing eye, but for reasons of safety it is preferred if the towing eye may be removably affixed to the towing eye bracket. If such a removable towing eye is lost, then it may still be possible to tow by connecting to the loop formed by the U-shaped arms to the bumper beam.

One potential problem with a towing eye is that this can compromise the performance of the bumper beam in a crash. If forces imparted by the crash impinge on the towing eye, then the bumper beam may be deformed at this point thereby weakening the beam. Since towing eyes generally extend outwards of the bumper, a removable towing eye can provide greater safety. Similarly, it is desirable if the towing eye bracket is secured behind the bumper beam relative to the bumper aperture. For example, if the beam has a surface directed away from the aperture, then the towing eye bracket may be secured to such a surface of the bumper beam away from the bumper.

The invention will now be described by way of example with reference to the accompanying drawings, in which:
Figure 1 is a view of a U-shaped towing bracket according to a preferred embodiment of the invention, having a removable towing eye;
Figures 2 and 3 are schematic views respectively from the front and above of a bumper beam to which the towing eye bracket of Figure 1 has been secured, less the removable towing eye;
Figure 4 shows in phantom outline a front view of a motor vehicle having a front moulded bumper secured to the bumper beam of Figures 2 and 3, with an aperture along a lower edge of the bumper to which an air grille having several slats may be removably attached; and
Figure 5 shows a view of a motor vehicle similar to that of Figure 4, having an air grille with a single slat removably attached to the bumper aperture.

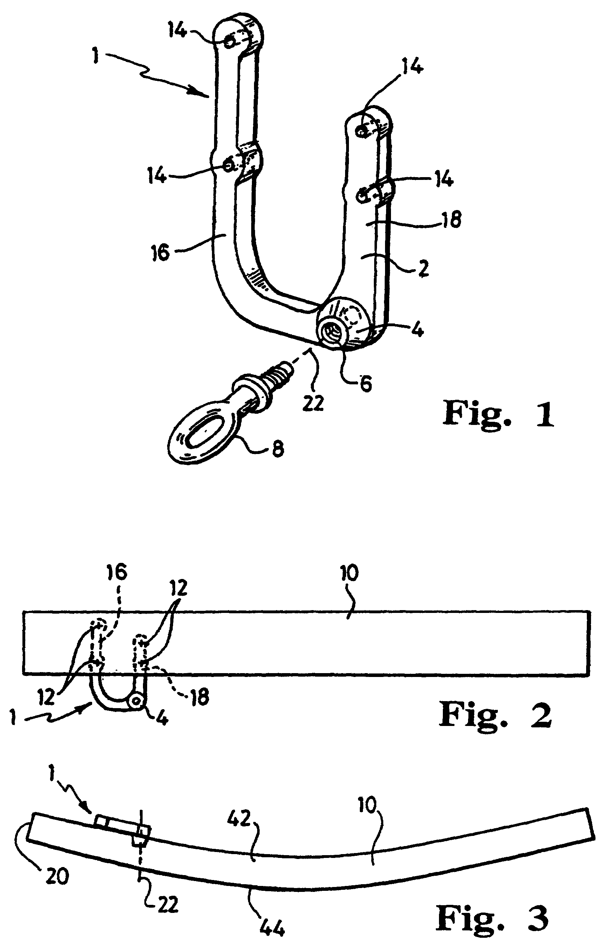

Figure 1 shows a towing eye bracket 1 formed in the shape of a "U" 2, and having in a lower right hand corner of the "U" 2 a boss 4 which stands proud of the plane of the "U". The boss has a central threaded bore 6 into which a removable towing eye 8 may be screwed to removably attach the towing eye 8 to the U-shaped bracket.

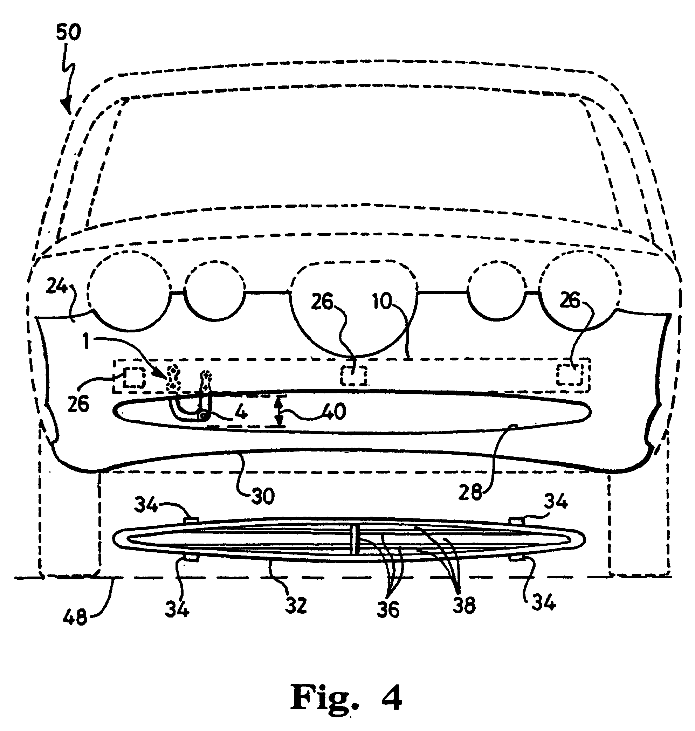

Figures 2 and 3 show a bumper beam 10 to which the towing eye bracket 1 has been secured by a number of bolts 12 through clearance bores 14 in arms 16,18 of the bracket 1. The towing eye bracket 1 is secured to the bumper beam 10 with the arms 16, 18 extending vertically upwards, so that the boss 4 is lower than the bumper beam 10. As can be seen from Figure 3, the bumper beam in a horizontal plane is slightly curved. The towing eye bracket 1 is secured towards one end 20 of the bumper beam 10, with the result that the threaded bore 6 has an axis 22 offset from a right angle to the plane of the U-shaped towing eye bracket 1, so that the axis 22 extends parallel to a longitudinal axis of the vehicle.

The arm 18 nearest the boss 4 is wider than the other arm 16, in order to accommodate the greater loads that will be placed on this arm 18 when towing. The arm 16 furthest from the boss 4 provides additional strength and also lateral bracing to prevent the towing eye bracket 1 from twisting about a vertical axis in the event that towing forces are not in line with the bore axis 22. The U-shape saves on material and weight compared with other types of towing eye bracket, for example, a bracket in the shape of a solid rectangular plate of similar outer dimensions.

Figure 4 shows a motor vehicle 50 having the bumper beam 10 and towing eye bracket 1 described above. The bumper beam 10 is inside the vehicle 50 behind a moulded front bumper 24. Although not shown in detail, brackets 26 or other such means will be provided between the bumper beam 10 and moulded bumper 24 to secure the bumper 24 to the bumper beam 10.

The bumper 24 shown in Figure 4 is a front bumper, but the invention is equally applicable to a rear bumper 24. The bumper 24 has an aperture 28 therethrough extending along substantially the whole width of the bumper 24 adjacent a lower edge 30 thereof. An air grill 32 is removably attachable by means of clips 34 into the aperture 28. The air grill 32 has a number of slats or vanes 36 with gaps 38 therebetween to allow an airflow through the air grill 32 when the motor vehicle 50 is in motion. This may provide some beneficial aerodynamic effect, for example by reducing drag or by directing airflow to a radiator (not shown).

The aperture 28 is disposed in front of the boss 4 on the towing eye bracket 1, so that the boss axis extends through the aperture 28. Therefore, when the air grill 32 is removed from the aperture 28, access may be had to the boss 4 of the towing eye bracket 1 in order to attach or remove the towing eye 8.

Because the air grill 32 is an interesting and aesthetically pleasing styling feature, it need not be made very small to disguise its function to allow access to the towing eye bracket 1. Therefore, even the smallest dimension of the aperture 28 in the vicinity of the boss 4, here a vertical dimension 40, is significantly larger than that normally available in the case where a cosmetically minimised small access cover matching the surrounding bumper has been provided. This makes it easier to affix the removable towing eye 8 to the boss 4.

As can be seen from Figure 3, the towing eye bracket 1 is provided on a side 42 of the bumper beam 10 that faces away from the aperture 28. The downwardly depending towing eye bracket 1 is therefore well set back from the aperture 28. Even with the air grill 32 removed from the aperture 28, it is not easy to see the towing eye bracket 1 without getting close to the aperture 28. When the air grill 32 is affixed to the aperture 28, then the towing eye bracket 1 is essentially concealed. The invention therefore provides easy and convenient access to the towing eye bracket 1 whilst at the same time allowing a designer of a bumper to achieve a pleasing design without the need for unsightly access covers.

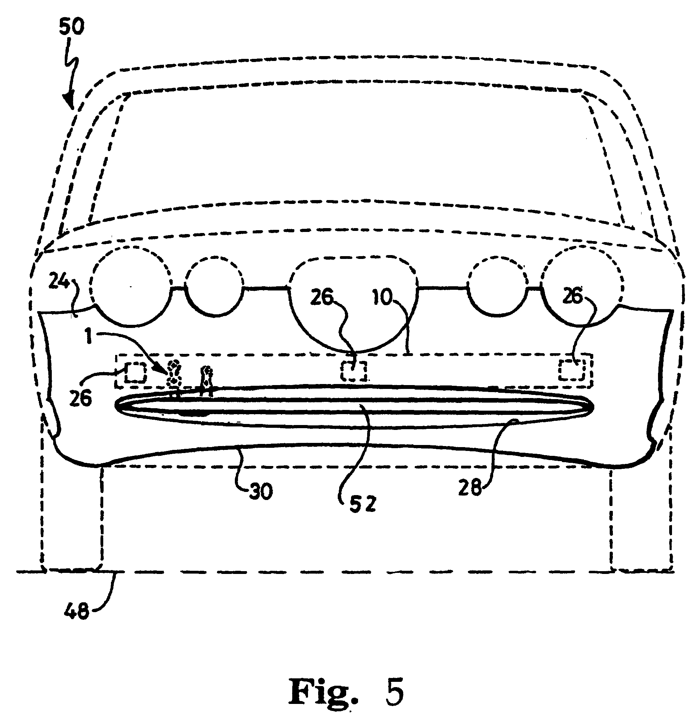

Figure 5 shows a motor vehicle 50 similar to that of Figure 4, having an air grille with a single slat 52 removably attached to the bumper aperture 28. Because the air grille 52 is centered in the aperture 28, it substantially conceals the towing eye bracket 1.

The towing eye bracket 1 may be formed from any convenient and inexpensive metal, for example a one-piece casting in hardened steel. Typical dimensions of the U-shaped towing eye bracket 1 are: width between the centre lines of the arms 16,18, 106 mm; length of the arm 16, 213 mm; length of the arm 18, 170 mm; width of each arm 16,18, about 20 mm to 25 mm; thickness of the bracket, 16 mm; and height of the raised boss, 40 mm.

The height of the boss axis 22 above a road surface 48 will be about 330 mm.

The length of the removable towing eye 8 should ideally be chosen so that this extends no further than a forward surface 44 of the bumper beam 10 when the towing eye 8 is affixed to the boss 4. The bumper beam 10 may, for example, be about 100 mm thick in a horizontal plane. Then, even if the towing eye is affixed, the towing eye 8 in a crash should be shielded from major impact forces by the front surface 44 of the towing beam 10. This arrangement therefore promotes safety in the event of a crash.

The towing eye bracket 1 according to the invention may be used with a wide variety of moulded bumpers, both at the front and rear of a motor vehicle. Because many vehicles do have a panel or air grill visually distinct from the rest of the bumper, it may be possible to modify at relatively low cost an existing design of moulded bumper to have a removably attachable panel or air grill to benefit from the invention without the need to design a complete new bumper assembly. Often, these panels or air grills extend laterally across the bumper for a significant distance. When a tow rope or towing bar is affixed to the towing eye bracket such that the rope or bar is roughly along a horizontal centre line of such an aperture, then the invention also allows a significant lateral deflection of the rope or bar along this centre line. Because such lateral deflections, for example during turning, are usually much greater than any vertical deflections, for example when going up or down a hill, the invention therefore permits the towing eye to be set further back within the aperture than would be the case with a much smaller cosmetically minimised cover plate.

## Claims

1. A motor vehicle (50) with a moulded bumper (24) which has an aperture (28) therethrough, a bumper beam (10) within the vehicle (50) and to which the bumper (24) is secured, a towing eye bracket (1) also secured to the bumper beam (10), at least one grille (32,52) and means (34) by which the grille (32,52) may be removably fitted within the bumper aperture (28), **characterised in that** the aperture (28) is disposed so that when the grille (32,52) is removed from the aperture (28), access may be had to the towing eye bracket (1) so that the vehicle (50) may tow/be towed.

2. A motor vehicle (50) as claimed in Claim 1, in which the bumper beam (10) extends transversely across substantially the width of the vehicle (50).

3. A motor vehicle (50) as claimed in Claim 1 or Claim 2, in which the towing eye bracket (1) depends downwardly from the bumper beam (10).

4. A motor vehicle (50) as claimed in Claim 3, in which the towing eye bracket (1) is U-shaped (2) with upwardly extending arms (16,18) by which the towing eye bracket (1) is secured to the bumper beam (10).

5. A motor vehicle (50) as claimed in Claim 3 of Claim 4, in which the aperture (28) is adjacent a lowermost edge (30) of the bumper (24).

6. A motor vehicle (50) as claimed in any preceding claim, in which the towing eye bracket (1) is secured behind the bumper beam (10) relative to the bumper aperture (28).

7. A motor vehicle (50) as claimed in any preceding claim, in which the towing eye bracket (1) includes means (4,6) by which a towing eye (8) may be removably affixed to the towing eye bracket (1).

8. A motor vehicle (50) as claimed in any preceding claim, in which in which the bumper (24) is a front bumper.

9. A motor vehicle (50) as claimed in any preceding claim, in which the grille (32,52) is an air grille.

## Patentansprüche

1. Kraftfahrzeug (50) mit einer gegossenen Stoßstange (24) mit einer Öffnung (28) darin, einem Stoßstangenholm (10), der innerhalb des Fahrzeuges (50) liegt, und an welchem die Stoßstange (24) befestigt ist, und mit einem Abschleppösenhalter (1), der ebenfalls am Stoßstangenholm (10) befestigt ist, wenigstens einem Lufteinlaßgitter (32, 52) und Mitteln (34), über welche das Lufteinlaßgitter (32, 52) lösbar in die Stoßstangenöffnung (28) eingesetzt werden kann,
**dadurch gekennzeichnet, daß**
die Öffnung (28) so angeordnet ist, daß, wenn das Gitter (32, 52) aus der Öffnung (28) herausgenommen wird, der Zugang zum Abschleppösenhalter (1) freigelegt wird, so daß das Fahrzeug (50) abschleppen/abgeschleppt werden kann.

2. Kraftfahrzeug (50) nach Anspruch 1, worin sich der Stoßstangenholm (10) quer über im wesentlichen die ganze Breite des Fahrzeuges (50) erstreckt.

3. Kraftfahrzeug (50) nach Anspruch 1 oder Anspruch 2, worin der Abschleppösenhalter (1) nach unten vom Stoßstangenholm (10) absteht.

4. Kraftfahrzeug (50) nach Anspruch 3, worin der Abschleppösenhalter (1) U-förmig (2) ausgebildet ist, mit nach oben abstehenden Schenkeln (16, 18), über welche der Abschleppösenhalter (1) am Stoßstangenholm (10) befestigt ist.

5. Kraftfahrzeug (50) nach Anspruch 3 oder Anspruch 4, worin die Öffnung (28) in unmittelbarer Nähe der untersten Kante (30) der Stoßstange (24) verläuft.

6. Kraftfahrzeug (50) nach einem beliebigen der vorangehenden Ansprüche, worin der Abschleppösenhalter (1) in bezug auf die Stoßstangenöffnung (28) hinter dem Stoßstangenholm (10) befestigt ist.

7. Kraftfahrzeug (50) nach einem beliebigen der vorangehenden Ansprüche, in welchem der Abschleppösenhalter (1) Mittel (4, 6) aufweist, über welche eine Abschleppöse (8) lösbar am Abschleppösenhalter (1) befestigt werden kann.

8. Kraftfahrzeug (50) nach einem beliebigen der vorangehenden Ansprüche, in welchem die Stoßstange (24) eine Bugstoßstange ist.

9. Kraftfahrzeug (50) nach einem beliebigen der vorangehenden Ansprüche, in welchem das Gitter (32, 52) ein Luftgitter ist.

## Revendications

1. Véhicule à moteur (50) ayant un pare-chocs moulé (24) qui comporte une ouverture (28) au travers de celui-ci, un longeron de pare-chocs (10) à l'intérieur du véhicule (50) et auquel le pare-chocs (24) est fixé, un support d'anneau de remorquage (1) également fixé au longeron de pare-chocs (10), au moins une grille (32, 52) et un moyen (34) par lequel la grille (32, 52) peut être ajustée de façon amovible à l'intérieur de l'ouverture du pare-chocs (28), **caractérisé en ce que** l'ouverture (28) est disposée de façon à ce que lorsque la grille (32, 52) est retirée de l'ouverture (28), un accès peut être réalisé au support d'anneau de remorquage (1) de façon à ce que le véhicule (50) puisse remorquer ou être remorqué.

2. Véhicule à moteur (50) selon la revendication 1, dans lequel le longeron de pare-chocs (10) s'étend transversalement sur pratiquement toute la largeur du véhicule (50).

3. Véhicule à moteur (50) selon la revendication 1 ou la revendication 2, dans lequel le support d'anneau de remorquage (1) est suspendu vers le bas au longeron de pare-chocs (10).

4. Véhicule à moteur (50) selon la revendication 3, dans lequel le support d'anneau de remorquage (1) est en forme de U (2), comprenant des bras s'étendant vers le haut (16, 18) grâce auxquels le support d'anneau de remorquage (1) est fixé au longeron de pare-chocs (10).

5. Véhicule à moteur (50) selon la revendication 3 ou la revendication 4, dans lequel l'ouverture (28) est adjacente au bord le plus bas (30) du pare-chocs (24).

6. Véhicule à moteur (50) selon l'une quelconque des revendications précédentes, dans lequel le support d'anneau de remorquage (1) est fixé derrière le longeron de pare-chocs (10) par rapport à l'ouverture du pare-chocs (28).

7. Véhicule à moteur (50) selon l'une quelconque des revendications précédentes, dans lequel le support d'anneau de remorquage (1) comprend des moyens (4, 6) grâce auxquels un anneau de remorquage (8) peut être fixé de façon amovible au support d'anneau de remorquage (1).

8. Véhicule à moteur (50) selon l'une quelconque des revendications précédentes, dans lequel le pare-chocs (24) est un pare-chocs avant.

9. Véhicule à moteur (50) selon l'une quelconque des revendications précédentes, dans lequel la grille (32, 52) est une grille d'entrée d'air.
